# EUROPEAN PATENT SPECIFICATION

(11) **EP 4 289 797 B1**
(45) Date of publication and mention of the grant of the patent: **04.03.2026**
(21) Application number: 22749572.8
(22) Date of filing: 26.01.2022
(51) Int. Cl.: C03B 23/03, C03B 23/025, C03B 35/20, C03B 23/035

(54) **BEND MOLDING APPARATUS AND BEND MOLDING METHOD**
BIEGEFORMVORRICHTUNG UND BIEGEFORMVERFAHREN
APPAREIL DE MOULAGE PAR CINTRAGE ET PROCÉDÉ DE MOULAGE PAR CINTRAGE

(30) Priority: 03.02.2021 JP 2021015486
(43) Date of publication of application: 13.12.2023
(73) Proprietor: AGC INC., Chiyoda-ku, Tokyo 1008405 (JP)
(72) Inventor: YAMAKAWA, Hiroshi, Tokyo 100-8405 (JP); YAMASAKI, Daisuke, Tokyo 100-8405 (JP); MARUMOTO, Naoya, Tokyo 100-8405 (JP); OTSUBO, Nozomi, Tokyo 100-8405 (JP); HAYASHIDA, Katsuyoshi, Tokyo 100-8405 (JP); FUJIKI, Itsuki, Kawasaki-City, Kanagawa 210-0024 (JP)
(74) Representative: Müller-Boré & Partner Patentanwälte PartG mbB
(86) International application number: PCT/JP2022/002845
(87) International publication number: WO 2022/168698

(56) References cited:
- JP-A- 2003 335 534
- JP-A- 2015 504 409
- JP-A- 2017 537 864
- US-A1- 2004 226 318
- US-B2- 8 549 885

## Description

### [Technical Field]

The present disclosure relates to bending devices and bending methods.

### [Background Art]

The device described in Patent Document 1 simultaneously bends two superposed glass sheets. The device includes an upper form having a bulge surface and a lower form having a recessed surface. The upper form having the bulge surface creates upward air flow to attract two glass sheets together by suction and holds them. Each of the upper form having the bulge surface and the lower form having the recessed surface has a shape that complements each other. The upper form having the bulge surface is in the form of an annular frame and holds the periphery portion of the glass sheet.

The device described in Patent Document 2 includes a mold having a specific contour. The mold includes a shaped rail that supports the peripheral edge of a glass sheet from below, and a chamber formed inside the shaped rail. A heated gas supply supplies heated gas to the chamber to bias the central portion of the glass sheet against a pressing surface of an upper mold by the pressure of the heated gas.

US 2004/226318 A1 describes an apparatus for shaping heat softened glass sheets that includes an upper mold having a full surface press face with a shaping surface generally contoured to the desired curvature of the sheets, a support device to support the sheets below the upper mold, a shaping rail having an upper sheet supporting surface that supports selected peripheral portions of the sheets, the sheet supporting surface having a profile corresponding to desired elevational contours of the selected peripheral portions of the sheets and complimenting corresponding portions of the upper mold shaping surface, a chamber positioned below the sheets, a moving device for moving the upper mold and the shaping rail relative to each other so as to press at least a periphery of the sheets against the upper mold shaping surface, and a connector to direct pressurized gas into the chamber to urge the sheets towards the upper mold press face.

US 8 549 885 B2 describes an apparatus and method for precision bending a glass sheet that includes an oven for heating the glass sheet to a temperature near the softening temperature of the glass sheet. A stage for supporting the glass sheet. A pair of reference surfaces on the stage for precisely locating the glass sheet on the stage. At least one bending mechanism on a pair of arms inside the oven for bending an edge portion of the glass sheet. Inward facing first stop surfaces on the arms that contact reference surfaces on the stage for precisely locating the bending mechanism on the arms relative to the stage and the glass sheet.

### [Related Art Documents]

### [Patent Documents]

[Patent Document 1] Japanese Unexamined Patent Application Publication (Translation of PCT Application) No. 2008-526659
[Patent Document 2] Japanese Unexamined Patent Application Publication (Translation of PCT Application) No. 2006-519748

### [Summary of the Invention]

### [Problems to be Solved by the Invention]

A device for bending a glass plate generally includes a gravity bending furnace, a plurality of carriers, and a conveyor. The gravity bending furnace is partitioned into a plurality of zones. The plurality of carriers is arranged at intervals inside the gravity bending furnace. Each carrier includes a ring mold that supports the peripheral edge of a glass plate from below. The conveyor intermittently moves the plurality of carriers collectively.

Gravity bending and press bending are known as techniques for bending a glass plate. In the gravity bending, a glass plate is bent by its own weight while the peripheral edge of the glass plate softened by heating is supported by a ring mold. In the press bending, a mold is pressed against a glass plate on a ring mold to transfer the shape of the mold to the glass plate.

The bent and formed glass plate is used, for example, as a front window glass for vehicle. In recent years, the functions of front window glass have been enhanced, and a glass plate having a curved surface with high surface accuracy is demanded.

In the gravity bending, by controlling the temperature distribution of the glass plate, the shape of the curved surface of the glass plate is controlled. Therefore, the surface accuracy of the curved surface is low. In the press bending, since the mold is pressed against the glass plate on the ring mold, the surface accuracy of the curved surface is also low.

Aspects of the present disclosure provide a technique for improving surface accuracy of a curved surface of a glass plate.

### [Means for Solving the Problem]

The underlying technical problem is solved by the subject-matter of the independent claim. Additional embodiments are defined in the dependent claims.

A bending device according to an aspect of the present disclosure includes a gravity bending furnace, a plurality of carriers, a conveyor, an upper mold, a first lifting mechanism, a lower mold, a second lifting mechanism, and a slide mechanism. The gravity bending furnace defines a pressing zone and a retracting zone therein. The plurality of carriers is arranged at intervals inside the gravity bending furnace, and each of the carriers includes a ring mold that supports the peripheral edge of a glass plate from below. The conveyor moves the plurality of carriers collectively. The upper mold presses the glass plate from above in the pressing zone. The first lifting mechanism lifts and lowers the upper mold in the pressing zone. The lower mold supports the glass plate from below in the pressing zone. The second lifting mechanism attaches and detaches the carrier to and from the conveyor in the retracting zone, and lifts and lowers the carrier detached from the conveyor in the retracting zone. The slide mechanism attaches and detaches the carrier to and from the conveyor in the pressing zone, and slides the carrier detached from the conveyor between the pressing zone and the retracting zone. The upper surface of the lower mold supports the entire lower surface of the glass plate when the upper mold presses the glass plate from above.

A bending device according to an example for better understanding the inventione includes a gravity bending furnace, a plurality of carriers, a conveyor, an upper mold, a first lifting mechanism, a lower mold, and a second lifting mechanism. The gravity bending furnace defines a pressing zone therein. The plurality of carriers is arranged at intervals inside the gravity bending furnace, and each of the carriers includes a ring mold that supports the peripheral edge of a glass plate from below. The conveyor moves the plurality of the carriers collectively. The upper mold presses the glass plate from above in the pressing zone. The first lifting mechanism lifts and lowers the upper mold in the pressing zone. The lower mold supports the glass plate from below in the pressing zone. The second lifting mechanism lifts and lowers the lower mold in the pressing zone. The lower mold lifts and lowers an inner portion of the ring mold of the carrier. The upper surface of the lower mold supports the center of the lower surface of the glass plate when the upper mold presses the glass plate from above.

### [Effects of the Invention]

According to the aspects of the present disclosure, it is possible to improve the surface accuracy of the curved surface of the glass plate.

### [Brief Description of the Drawings]

[FIG. 1] FIG. 1 is a cross-sectional view illustrating a bending device according to a first embodiment in accordance with the invention.
[FIGS. 2] FIGS. 2 are cross-sectional views illustrating each example of the operations of the bending device, in which FIG. 2(A) is a cross-sectional view illustrating an example of S102 of FIG. 5, FIG. 2(B) is a cross-sectional view illustrating an example of S104 of FIG. 5, and FIG. 2(C) is a cross-sectional view illustrating an example of S105 of FIG. 5.
[FIGS. 3] FIGS. 3 are cross-sectional views illustrating each example of the operations after those illustrated in FIG. 2, in which FIG. 3(A) is a cross-sectional view illustrating an example of S108 illustrated in FIG. 5, FIG. 3(B) is a cross-sectional view illustrating an example of S110 illustrated in FIG. 5, and FIG. 3(C) is a cross-sectional view illustrating an example of S111 illustrated in FIG. 5.
[FIGS. 4] FIGS. 4 are cross-sectional views illustrating each example of the operations after those illustrated in FIG. 3, in which FIG. 4(A) is a cross-sectional view illustrating an example of S113 illustrated in FIG. 5, and FIG. 4(B) is a cross-sectional view illustrating an example of S114 illustrated in FIG. 5.
[FIG. 5] FIG. 5 is a flowchart illustrating a bending method according to the first embodiment in accordance with the invention.
[FIG. 6] FIG. 6 is a cross-sectional view illustrating a bending device according to a second embodiment as an example for better understanding the invention.
[FIGS. 7] FIGS. 7 are cross-sectional views illustrating each example of the operations of the bending device, in which FIG. 7(A) is a cross-sectional view illustrating an example of S302 of FIG. 8, FIG. 7(B) is a cross-sectional view illustrating an example of S303 of FIG. 8, FIG. 7(C) is a cross-sectional view illustrating an example of S304 of FIG. 8, and FIG. 7(D) is a cross-sectional view illustrating an example of S305 of FIG. 8.
[FIG. 8] FIG. 8 is a flowchart illustrating a bending method according to the second embodiment as an example for better understanding the invention.

### [Embodiments for Carrying out the Invention]

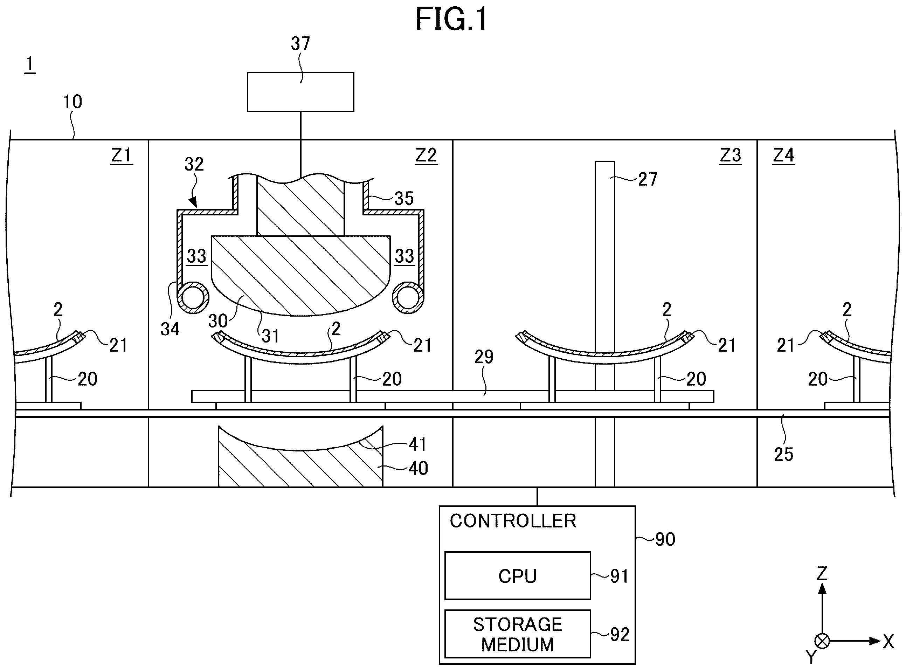

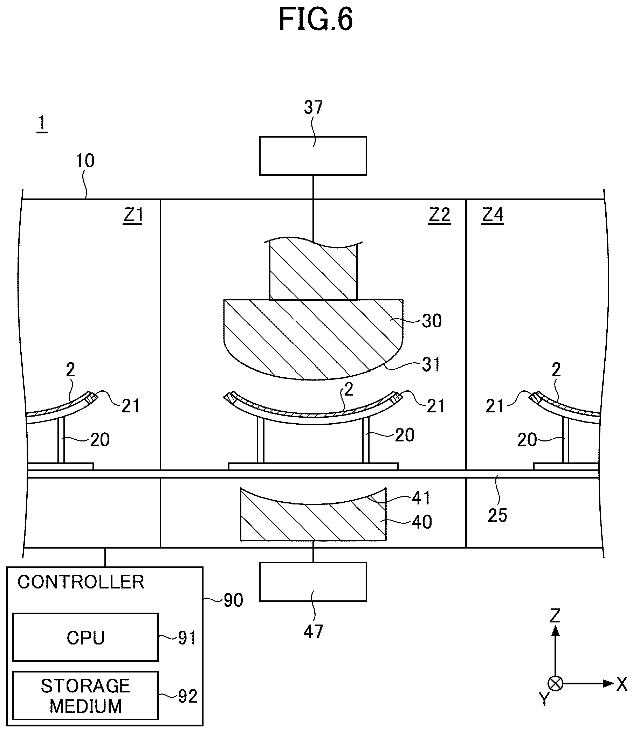

Hereinafter, embodiments of the present disclosure will be described with reference to the drawings. In the drawings, the same or corresponding components are denoted by the same reference numerals, and description thereof may be omitted. Further, in FIGS. 1 and 6, an X-axis direction, a Y-axis direction, and a Z-axis direction are directions perpendicular to each other, the X-axis direction and the Y-axis direction are horizontal directions, and the Z-axis direction is a vertical direction.

### (First Embodiment in accordance with the invention)

A bending device 1 according to a first embodiment in accordance with the invention will be described with reference to FIG. 1. The bending device 1 illustrated in FIG. 1 pre-bends two superposed glass plates 2 together (only one plate is illustrated in FIG. 1) in the gravity bending, and then performs the press bending on the two superposed glass plates 2 together. A mold release agent applied in advance between the two glass plates 2 is removed after bending. Thereafter, the two glass plates 2 are bonded to each other via an interlayer film, and as a result, a laminated glass is obtained.

The laminated glass is used, for example, as a front window glass for vehicle. In recent years, the functions of front window glass have been enhanced. For example, a head-up display (HUD) may project an image on a front window glass. Further, a device such as a camera may be attached to a front window glass. For reducing distortion of an image or for improving mounting accuracy of a device, the glass plate 2 having a curved surface with high surface accuracy is demanded.

By bending the two glass plates 2 constituting the laminated glass simultaneously, the surface accuracy of the two glass plates 2 can be matched. However, the bending device 1 may bend the glass plates 2 one by one. When the glass plates 2 are bent one by one, the mold release agent is naturally unnecessary. Note that the laminated glass may be constituted by three or more glass plates.

The two glass plates 2 constituting the laminated glass may have different thicknesses. The thickness of the glass plate 2 at the vehicle exterior side is equal to or greater than the thickness of the glass plate 2 at the vehicle interior side, and is preferably greater than the thickness of the glass plate 2 at the vehicle interior side. The thickness of the glass plate 2 at the vehicle exterior side is, for example, 1.1 mm to 3.0 mm. On the other hand, the thickness of the glass plate 2 at the vehicle interior side is, for example, 0.5 mm to 2.3 mm.

When the bending is simultaneously performed on the two glass plates 2 having different thicknesses constituting the laminated glass, the thin glass plate 2 is arranged on the thick glass plate 2. That is, by arranging the glass plate 2 with low bending rigidity on the glass plate 2 with high bending rigidity, the surface accuracy of the two glass plates 2 can be matched.

The glass plate 2 may be provided with a solar control coating. The solar control coating is a heat reflective coating or a low emissivity coating, and is preferably the low emissivity coating. The solar control coating is provided on the main surface of the glass plate 2 on the opposite side of a conveyor 25. The low emissivity coating is preferably provided on the outermost recessed surfaces of the two glass plates 2 constituting the laminated glass.

The low emissivity coating may include a metal oxide layer. The metal is at least one selected from tin, zinc, indium, tungsten, and molybdenum. The metal oxide may contain fluorine, chlorine, antimony, tin, aluminum, tantalum, niobium, indium, or gallium as a dopant. The low emissivity coating may include an underlayer of silicon oxide or silicon oxynitride. The low emissivity coating may be a multilayer film including a metal layer and a pair of dielectric layers.

In the case where the glass plate 2 is provided with the low emissivity coating, in a bending device only with the gravity bending, the low emissivity coating may be cracked after annealing. In contrast, it has been found that, in a bending device only with the press bending, the low emissivity coating is not cracked, a low emissivity is maintained, and reflection distortion is not exacerbated, after annealing.

The glass plate 2 may be provided with a shielding print forming a shielding band directly on the low emissivity coating. The shielding print may be a black ceramic layer. When the shielding print is provided directly on the low emissivity coating, in the bending device only with the gravity bending, the shielding print and the low emissivity coating may be cracked and peeled off after annealing. On the other hand, it is expected that, in the bending device only with the press bending, the shielding print and the low emissivity coating are not cracked, the low emissivity is maintained, and the reflection distortion is not exacerbated, after annealing. Similarly, also in the bending device 1 of the present disclosure that performs the press bending after the gravity bending, it can be expected that the shielding print and the low emissivity coating are not cracked, the low emissivity is maintained, and the reflection distortion is not exacerbated.

As illustrated in FIG. 1, the bending device 1 includes, for example, a gravity bending furnace 10, a plurality of carriers 20, the conveyor 25, an upper mold 30, a first lifting mechanism 37, a lower mold 40, a second lifting mechanism 27, a slide mechanism 29, and a controller 90. Hereinafter, each component will be described.

The gravity bending furnace 10 defines a plurality of zones. The plurality of zones is partitioned by heat insulating walls or the like. The plurality of zones may have different lengths. Each zone is provided with a heating source (not illustrated). The heating source heats the glass plate 2 placed on the carrier 20 from both upper and lower sides. Further, the heating source may heat the glass plate 2 from the side.

In the gravity bending furnace 10, for example, a pre-processing zone Z1, a pressing zone Z2, a retracting zone Z3, and a post-processing zone Z4 are formed in this order. The pre-processing zone Z1 is a zone in which the glass plate 2 is processed to have a temperature distribution that allows the press bending of the glass plate 2 while the glass plate 2 is pre-bent by the gravity bending on a ring mold 21. The pressing zone Z2 is a zone in which the press bending is performed on the glass plate 2 with the upper mold 30 and the lower mold 40. The retracting zone Z3 is a zone in which the carriers 20 are retracted during the press bending. The post-processing zone Z4 is a zone in which the annealing is performed on the glass plate 2 that has been subjected to the press bending.

The plurality of carriers 20 are arranged at intervals inside the gravity bending furnace 10. The intervals are, for example, equal intervals. Each of the plurality of carriers 20 comes into contact with the peripheral edge of the glass plate 2 and includes the ring mold 21 that supports the peripheral edge from below. The glass plate 2 is heated and softened on the ring mold 21 in the pre-processing zone Z1. As a result, the glass plate 2 is bent along the ring mold 21.

The ring mold 21 may be an integral body or may be divided in the circumferential direction. In the latter case, the plurality of divided bodies constituting the ring mold 21 may be relatively moved or rotated to obtain a desired shape. Further, the carrier 20 may include a plurality of ring molds 21 having partially different curvatures, and the ring molds 21 supporting the glass plate 2 may be replaced with each other.

The conveyor 25 collectively moves the plurality of carriers 20. Each of the plurality of carriers 20 is attachable/detachable with respect to the conveyor 25. By lifting the carrier 20 from the conveyor 25, the carrier 20 can be detached from the conveyor 25. By setting down the carrier 20 to the conveyor 25, the carrier 20 is installed to the conveyor 25. The conveyor 25 intermittently moves the plurality of carriers 20 collectively.

The upper mold 30 presses the glass plate 2 from above in the pressing zone Z2. A lower surface 31 of the upper mold 30 is a curved surface that bulges downward. The lower surface 31 of the upper mold 30 has a size substantially equal to or larger than the upper surface of the glass plate 2 and comes into contact with the entire upper surface of the glass plate 2 to press the entire upper surface thereof. The surface accuracy of the upper surface of the glass plate 2 can be improved as compared with the case where only a part of the upper surface of the glass plate 2 is pressed.

The lower surface 31 of the upper mold 30 may be substantially entirely covered with a cloth (not illustrated). The cloth is a metal cloth, a glass cloth, or the like. The cloth is attached to the upper mold 30 by hooks or the like, and prevents the glass plate 2 from being damaged by the contact between the upper mold 30 and the glass plate 2. Further, the cloth covers gas blow holes which will be described later, thereby preventing the contours of the gas blow holes from being transferred to the glass plate 2.

The lower surface 31 of the upper mold 30 includes the gas blow holes (not illustrated). The gas blow holes are dispersedly arranged on the lower surface 31 of the upper mold 30. The gas blow holes blow gas such as air downward, and the glass plate 2 is released from the upper mold 30 by the blow pressure. The released glass plate 2 is placed on the carrier 20.

The lower surface 31 of the upper mold 30 may have no gas suction hole. If there is a gas suction hole, negative pressure is generated on the lower surface 31 of the upper mold 30 by the gas suction hole sucking gas. With the negative pressure, the glass plate 2 can be attracted by suction to the upper mold 30. However, if there is no gas suction hole, the contour of the gas suction hole is not transferred to the glass plate 2.

The first lifting mechanism 37 lifts and lowers the upper mold 30 in the pressing zone Z2. The first lifting mechanism 37 is, for example, a hydraulic cylinder. The first lifting mechanism 37 lowers the upper mold 30 to press the glass plate 2 with the upper mold 30. The first lifting mechanism 37 also lifts the upper mold 30 to retract the upper mold 30 from the travelling path of the carrier 20.

The lower mold 40 supports the glass plate 2 from below in the pressing zone Z2. Like the lower surface 31 of the upper mold 30, an upper surface 41 of the lower mold 40 is a curved surface that bulges downward, i.e., a recessed curved surface. When the upper mold 30 presses the glass plate 2 from above, the upper surface 41 of the lower mold 40 comes into contact with the entire lower surface of the glass plate 2 and supports the entire lower surface. As compared with the case where only the peripheral edge of the lower surface of the glass plate 2 is supported by the ring mold 21, the surface accuracy of the lower surface of the glass plate 2 can be improved.

Substantially the entire upper surface 41 of the lower mold 40 may be covered with a cloth (not illustrated). The cloth is a metal cloth, a glass cloth, or the like. The cloth is attached to the lower mold 40 by hooks or the like, and prevents the glass plate 2 from being damaged by the contact between the lower mold 40 and the glass plate 2.

The upper surface 41 of the lower mold 40 may have no gas suction hole. If there is a gas suction hole, negative pressure is generated on the upper surface 41 of the lower mold 40 by the gas suction hole sucking gas. With the negative pressure, the glass plate 2 can be attracted by suction to the lower mold 40. However, if there is no gas suction hole, the contour of the gas suction hole is not transferred to the glass plate 2.

In the pressing zone Z2, the upper mold 30 and the lower mold 40 are disposed. The upper mold 30 is disposed above the travelling path of the carrier 20, and the lower mold 40 is disposed below the travelling path of the carrier 20. Thereby, the upper mold 30 and the lower mold 40 sandwich and press the glass plate 2.

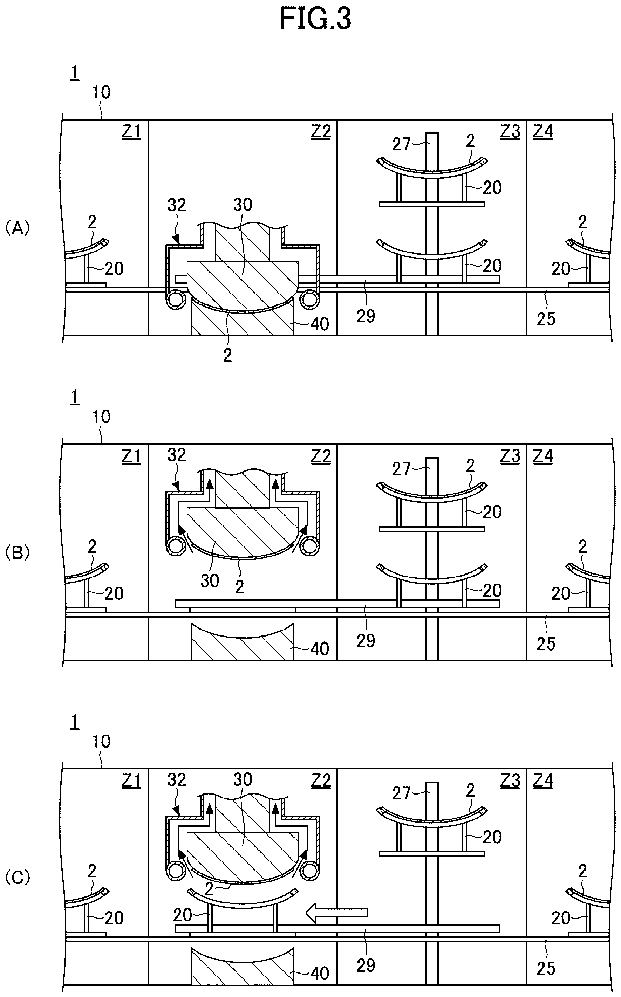

Accordingly, the bending device 1 according to the present embodiment includes the second lifting mechanism 27 and the slide mechanism 29 in order to retract the carrier 20 from the pressing zone Z2 to the retracting zone Z3 before the glass plate 2 is sandwiched and pressed between the upper mold 30 and the lower mold 40. As illustrated in FIG. 3(A), if the carrier 20 is retracted in advance, the upper mold 30 can enter the travelling path of the carrier 20, and the glass plate 2 can be sandwiched and pressed between the upper mold 30 and the lower mold 40.

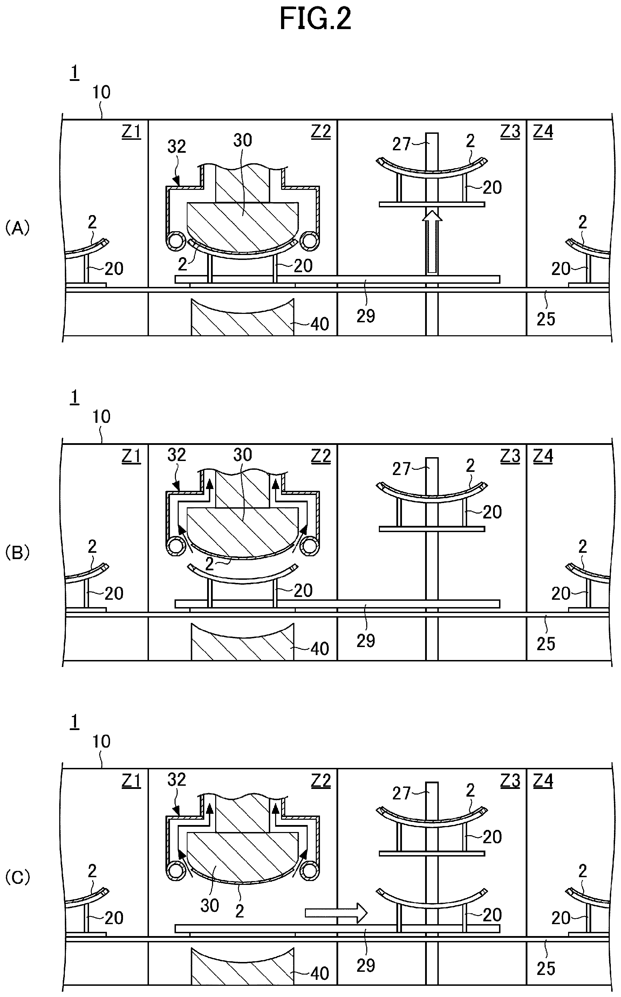

The second lifting mechanism 27 attaches and detaches the carrier 20 to and from the conveyor 25 in the retracting zone Z3. The second lifting mechanism 27 also lifts and lowers the carrier 20 detached from the conveyor 25 in the retracting zone Z3. That is, the second lifting mechanism 27 detaches the carrier 20 from the conveyor 25 by lifting the carrier 20 from the conveyor 25 in the retracting zone Z3. Subsequently, the second lifting mechanism 27 further lifts the carrier 20 to form a space for receiving another carrier 20 below the lifted carrier 20. As a result, as illustrated in FIG. 2(C), the slide mechanism 29 can slide an empty carrier 20 below the carrier 20 lifted by the second lifting mechanism 27. The empty carrier 20 is a carrier 20 on which the glass plate 2 is not placed.

The slide mechanism 29 attaches and detaches the carrier 20 to and from the conveyor 25 in the pressing zone Z2. The slide mechanism 29 also slides the carrier 20 detached from the conveyor 25 between the pressing zone Z2 and the retracting zone Z3. That is, the slide mechanism 29 lifts and detaches the carrier 20 from the conveyor 25 before sliding the carrier 20 horizontally. Subsequently, the slide mechanism 29 horizontally slides the carrier 20 from the pressing zone Z2 to the retracting zone Z3.

As illustrated in FIG. 2(C), there is no carrier 20 in the pressing zone Z2. Therefore, as illustrated in FIG. 3(A), the upper mold 30 can enter the travelling path of the carrier 20. As a result, the glass plate 2 can be sandwiched and pressed between the upper mold 30 and the lower mold 40. After pressing, the slide mechanism 29 horizontally slides the carrier 20 from the retracting zone Z3 to the pressing zone Z2. The slide mechanism 29 then lowers and attaches the carrier 20 to the conveyor 25.

As described above, in the pressing zone Z2, the lower mold 40 and the upper mold 30 sandwich and press the glass plate 2. For that, the bending device 1 may include a suction device 32 such that the upper mold 30 can receive the glass plate 2 from the carrier 20 before the glass plate 2 is pressed. The suction device 32 attracts the glass plate 2 by suction to the upper mold 30. The suction device 32 is fixed to the upper mold 30 and is lifted and lowered by the first lifting mechanism 37.

As illustrated in FIG. 1, the suction device 32 includes a suction cover 34 that forms an annular slit 33 for sucking gas around the lower surface 31 of the upper mold 30. The slit 33 is connected to a suction source outside the gravity bending furnace 10 via a duct 35 or the like. As illustrated in FIG. 2(B), the slit 33 sucks the gas below the upper mold 30 and forms an updraft below the upper mold 30. The two superposed glass plates 2 can be collectively attracted to the upper mold 30 by the updraft.

In the case that the suction device 32 attracts the glass plate 2 by suction to the upper mold 30, the lower surface 31 of the upper mold 30 may have no gas suction hole. If there is a gas suction hole, negative pressure is generated on the lower surface 31 of the upper mold 30 by the gas suction hole sucking gas. With the negative pressure, the glass plate 2 can be attracted to the upper mold 30. However, if there is no gas suction hole, the contour of the gas suction hole is not transferred to the glass plate 2.

The controller 90 is, for example, a computer, and includes a central processing unit (CPU) 91 and a storage medium 92 such as a memory. The storage medium 92 stores a program for controlling various processes executed in the bending device 1. The controller 90 controls the operations of the bending device 1 by causing the CPU 91 to execute the program stored in the storage medium 92.

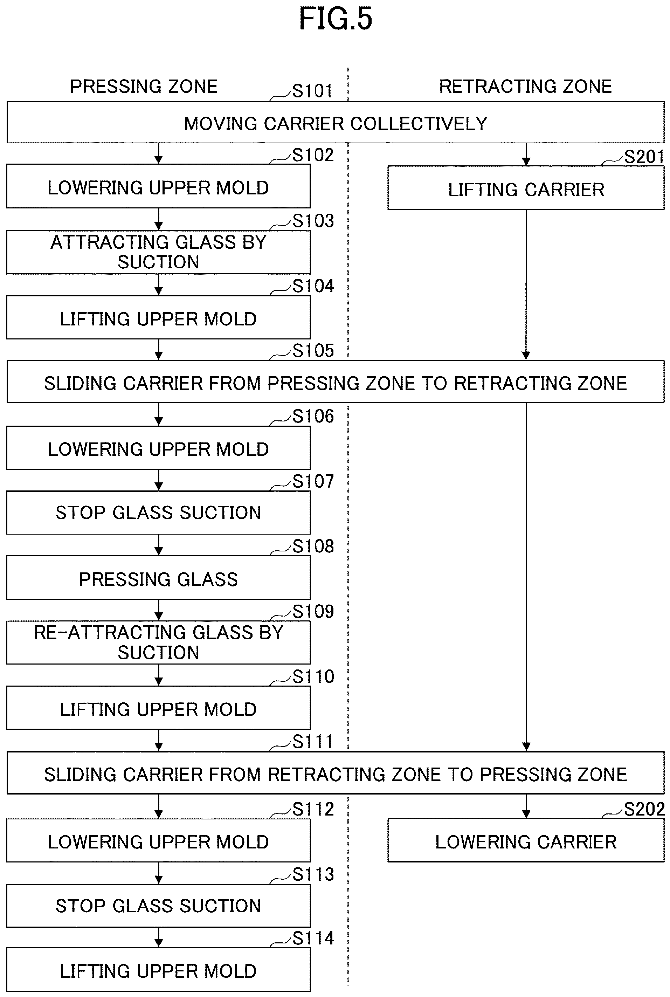

Next, the operations of the bending device 1 according to the first embodiment in accordance with the invention will be described with reference to FIG. 1 to FIG. 5. The series of operations illustrated in FIG. 1 to FIG. 5 is performed under the control of the controller 90. First, the conveyor 25 collectively moves the plurality of carriers 20 (Step S101). As a result, as illustrated in FIG. 1, one carrier 20 is disposed in each of the pressing zone Z2 and the retracting zone Z3. Each carrier 20 has the glass plate 2 thereon.

Next, as illustrated in FIG. 2(A), the first lifting mechanism 37 lowers the upper mold 30 to bring the lower surface 31 of the upper mold 30 close to the glass plate 2 to such an extent that a slight clearance is formed therebetween (Step S102). Subsequently, the suction device 32 attracts the glass plate 2 by suction to the upper mold 30 (Step S103). Next, as illustrated in FIG. 2(B), the first lifting mechanism 37 lifts the glass plate 2 together with the upper mold 30 (Step S104).

In Step S102 to Step S104, the glass plate 2 is shifted from the carrier 20 to the upper mold 30. The glass plate 2 is held by the upper mold 30 above the travelling path of the carrier 20. While the above Step S102 to Step S104 are performed in the pressing zone Z2, the second lifting mechanism 27 lifts the carrier 20 in the retracting zone Z3 (Step S201).

As illustrated in FIG. 2(A), the second lifting mechanism 27 detaches the carrier 20 from the conveyor 25 by lifting the carrier 20 from the conveyor 25 in the retracting zone Z3. Subsequently, the second lifting mechanism 27 further lifts the carrier 20 to form a space for receiving another carrier 20 below the lifted carrier 20. Step S201 may be performed after Step S101 and before Step S105.

Next, as illustrated in FIG. 2(C), the slide mechanism 29 lifts and detaches the carrier 20 from the conveyor 25 in the pressing zone Z2, and horizontally slides the detached carrier 20 from the pressing zone Z2 to the retracting zone Z3 (Step S105). The slide mechanism 29 also slides an empty carrier 20 below the carrier 20 previously lifted by the second lifting mechanism 27.

As a result, in the retracting zone Z3, two carriers 20 are arranged at an interval in the vertical direction. On the other hand, since there is no carrier 20 in the pressing zone Z2, the upper mold 30 can enter the travelling path of the carrier 20.

Next, the first lifting mechanism 37 lowers the glass plate 2 together with the upper mold 30 and brings the glass plate 2 close to the lower mold 40 to such an extent that a slight clearance is formed therebetween (Step S106). Subsequently, the suction device 32 stops the suction of the glass plate 2 with respect to the upper mold 30 (Step S107). Then, as illustrated in FIG. 3(A), the first lifting mechanism 37 further lowers the upper mold 30 to sandwich and press the glass plate 2 between the upper mold 30 and the lower mold 40 (Step S108).

According to the present embodiment, when the upper mold 30 and the lower mold 40 press the glass plate 2, the suction device 32 stops the suction of the glass plate 2 with respect to the upper mold 30. The adhesiveness of the two superposed glass plates 2 can be improved, and the surface accuracy of the two glass plates 2 can be matched. However, when the upper mold 30 and the lower mold 40 press the glass plate 2, the suction device 32 may not stop the suction of the glass plate 2 with respect to the upper mold 30.

Thereafter, the suction device 32 re-attracts the glass plate 2 by suction again to the upper mold 30 (Step S109). Subsequently, as illustrated in FIG. 3(B), the first lifting mechanism 37 lifts the glass plate 2 together with the upper mold 30 above the travelling path of the carrier 20 (Step S110). Thereby, a space for returning the empty carrier 20 is formed below the upper mold 30.

Next, as illustrated in FIG. 3(C), the slide mechanism 29 horizontally slides the empty carrier 20 from the retracting zone Z3 to the pressing zone Z2 (Step S111). Subsequently, the slide mechanism 29 lowers and attaches the empty carrier 20 to the conveyor 25.

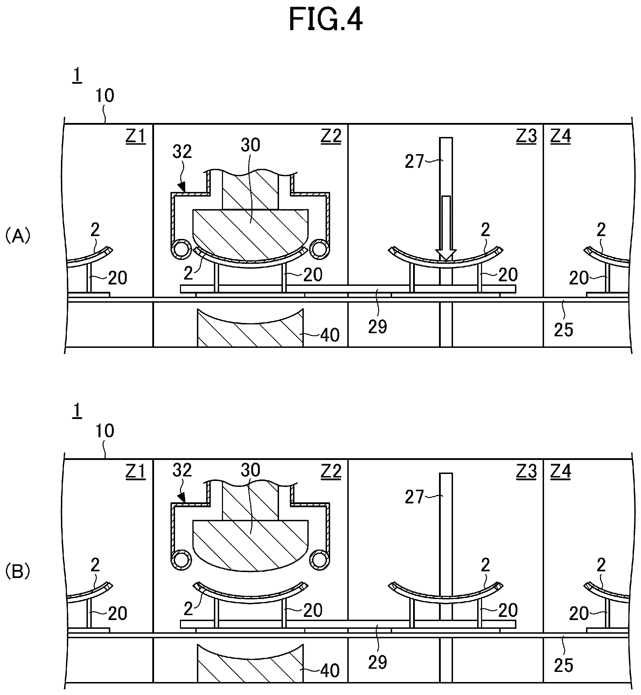

Next, the first lifting mechanism 37 lowers the glass plate 2 together with the upper mold 30, and places the glass plate 2 on the carrier 20 (Step S112). Subsequently, as illustrated in FIG. 4(A), the suction device 32 stops the suction of the glass plate 2 with respect to the upper mold 30 (Step S113). At this time, the gas blow holes in the lower surface 31 of the upper mold 30 may blow gas downward to release the glass plate 2 from the upper mold 30 with the blow pressure. Then, as illustrated in FIG. 4(B), the first lifting mechanism 37 lifts the upper mold 30 above the travelling path of the carrier 20 (Step S114).

In Step S112 to Step S114, the glass plate 2 is shifted from the upper mold 30 to the carrier 20. While Step S112 to Step S114 are performed in the pressing zone Z2, the second lifting mechanism 27 lowers the carrier 20 in the retracting zone Z3 as illustrated in FIG. 4(A) (Step S202). The second lifting mechanism 27 lowers and attaches the carrier 20 to the conveyor 25. Step S202 may be performed between Step S111 and the next Step S101.

Thereafter, when Step S101 is performed again, the glass plate 2 that has been subjected to the press bending is moved together with the carrier 20 from the pressing zone Z2 to the retracting zone Z3. The glass plate 2 then passes through the post-processing zone Z4 together with the carrier 20, and is finally taken out of the gravity bending furnace 10.

### (Second Embodiment as an example for better understanding the invention)

Next, a bending device 1 according to a second embodiment as an example for better understanding the invention will be described with reference to FIG. 6. Hereinafter, differences between the present embodiment and the first embodiment in accordance with the invention will be mainly described. As illustrated in FIG. 6, the bending device 1 includes, for example, a gravity bending furnace 10, a plurality of carriers 20, a conveyor 25, an upper mold 30, a first lifting mechanism 37, a lower mold 40, a second lifting mechanism 47, and a controller 90. Each component will be described below.

In the gravity bending furnace 10, for example, a pre-processing zone Z1, a pressing zone Z2, and a post-processing zone Z4 are formed in this order. Unlike the first embodiment in accordance with the invention, the gravity bending furnace 10 does not form a retracting zone Z3 between the pre-processing zone Z1 and the post-processing zone Z4. A glass plate 2 is heated and softened on a ring mold 21 in the pre-processing zone Z1. As a result, the glass plate 2 is bent along the ring mold 21.

The upper mold 30 presses the glass plate 2 from above in the pressing zone Z2. A lower surface 31 of the upper mold 30 is a curved surface that bulges downward. The lower surface 31 of the upper mold 30 has a size substantially equal to or larger than the upper surface of the glass plate 2 and comes into contact with the entire upper surface of the glass plate 2 to press the entire upper surface thereof. The surface accuracy of the upper surface of the glass plate 2 can be improved as compared with the case where only a part of the upper surface of the glass plate 2 is pressed.

The first lifting mechanism 37 lifts and lowers the upper mold 30 in the pressing zone Z2. The first lifting mechanism 37 is, for example, a hydraulic cylinder. The first lifting mechanism 37 lowers the upper mold 30 to press the glass plate 2 with the upper mold 30. Further, the first lifting mechanism 37 lifts the upper mold 30 to retract the upper mold 30 from the travelling path of the carrier 20.

The lower mold 40 supports the glass plate 2 from below in the pressing zone Z2. Like the lower surface 31 of the upper mold 30, the upper surface 41 of the lower mold 40 is a curved surface that bulges downward, i.e., a recessed curved surface. When the upper mold 30 presses the glass plate 2 from above, the upper surface 41 of the lower mold 40 comes into contact with the center of the lower surface of the glass plate 2 and supports the center of the lower surface. As compared with the case where only the peripheral edge of the lower surface of the glass plate 2 is supported by the ring mold 21, the surface accuracy of the center of the lower surface of the glass plate 2 can be improved.

In the present embodiment, the upper mold 30 and the lower mold 40 are disposed in the pressing zone Z2 as in the first embodiment in accordance with the invention. The upper mold 30 is disposed above the travelling path of the carrier 20, and the lower mold 40 is disposed below the travelling path of the carrier 20. Thereby, the upper mold 30 and the lower mold 40 sandwich and press the glass plate 2.

However, in the present embodiment, unlike the first embodiment in accordance with the invention, the gravity bending furnace 10 does not form the retracting zone Z3 between the pre-processing zone Z1 and the post-processing zone Z4. Therefore, the carrier 20 cannot be retracted from the pressing zone Z2 to the retracting zone Z3.

Thus, in the present embodiment, the upper surface 41 of the lower mold 40 is smaller than the lower surface of the glass plate 2 and does not come into contact with the peripheral edge of the lower surface of the glass plate 2. The lower mold 40 is smaller than the ring mold 21, and lifts the inner portion of the ring mold 21 to press the center of the lower surface of the glass plate 2. The second lifting mechanism 47 lifts and lowers the lower mold 40 in the pressing zone Z2.

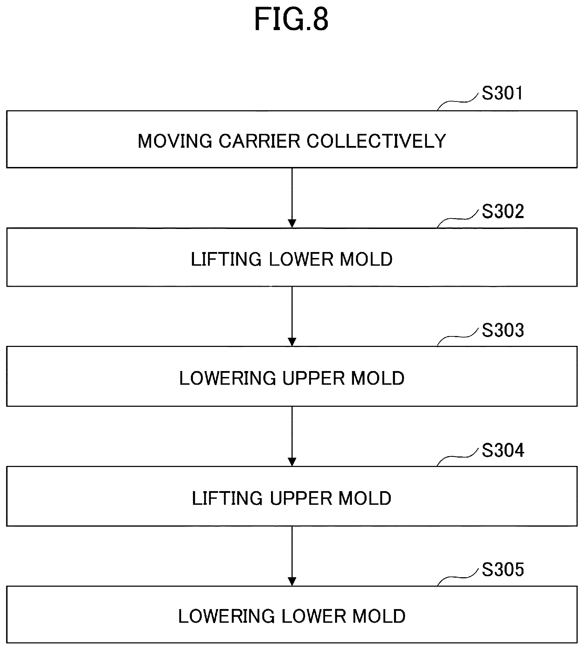

Next, the operations of the bending device 1 according to the second embodiment as an example for better understanding the invention will be described with reference to FIG. 6 to FIG. 8. The series of operations illustrated in FIG. 6 to FIG. 8 is performed under the control of the controller 90. First, the conveyor 25 collectively moves the plurality of carriers 20 (Step S301). As a result, as illustrated in FIG. 6, one of the carriers 20 is disposed in the pressing zone Z2. The glass plate 2 is placed on the carrier 20.

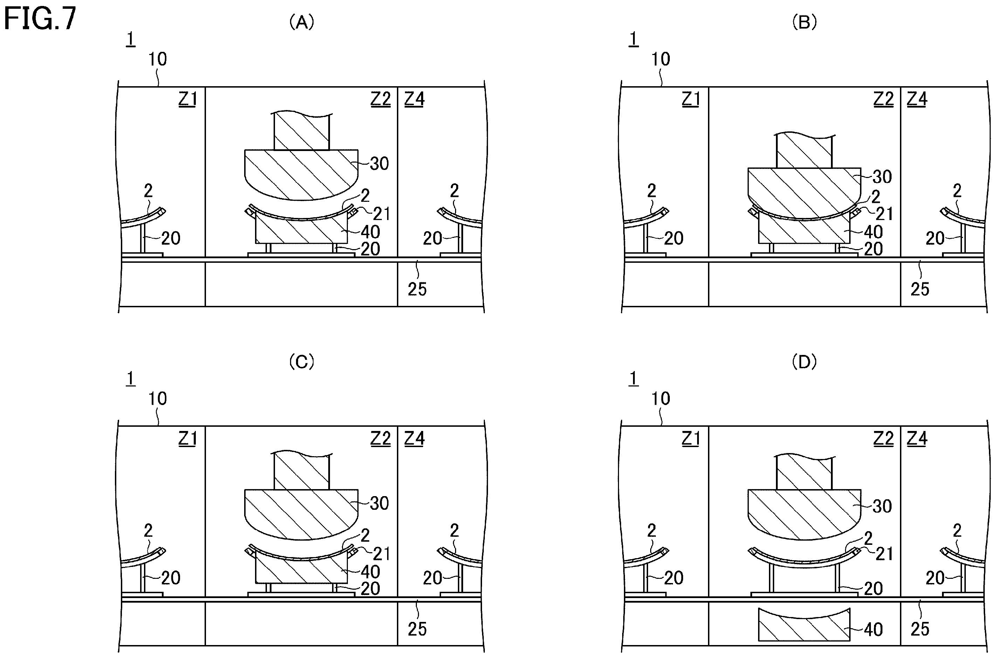

Next, as illustrated in FIG. 7(A), the second lifting mechanism 47 lifts the lower mold 40 (Step S302). The lower mold 40 lifts the inner portion of the ring mold 21, receives the glass plate 2 from the ring mold 21, and causes the glass plate 2 to be floated above the ring mold 21. The glass plate 2 may be supported from below by both the ring mold 21 and the lower mold 40 without being floated above the ring mold 21.

Next, as illustrated in FIG. 7(B), the first lifting mechanism 37 lowers the upper mold 30 (Step S303). As a result, the upper mold 30 and the lower mold 40 sandwich and press the glass plate 2.

Next, as illustrated in FIG. 7(C), the first lifting mechanism 37 lifts the upper mold 30 above the travelling path of the carrier 20 (Step S304). The gas blow holes in the lower surface 31 of the upper mold 30 may blow gas downward to release the glass plate 2 from the upper mold 30 with the blow pressure, before the upper mold 30 starts to be lifted or during the lifting of the upper mold 30.

Finally, as illustrated in FIG. 7(D), the second lifting mechanism 47 lowers the lower mold 40 below the travelling path of the carrier 20 (Step S305). The lower mold 40 lowers the inner portion of the frame-shaped ring mold 21 and shifts the glass plate 2 to the ring mold 21.

When the Step S301 is performed again, the glass plate 2 that has been subjected to the press bending is moved from the pressing zone Z2 to the post-processing zone Z4 together with the carrier 20. Thereafter, the glass plate 2 is taken out of the gravity bending furnace 10 together with the carrier 20.

Although the bending device and the bending method according to the present disclosure have been described above, the present disclosure is not limited to the above-described embodiments and the like. Various changes, modifications, substitutions, additions, deletions, and combinations are possible.

### [List of Reference Numerals]

- 1: Bending device
- 10: Gravity bending furnace
- 20: Carrier
- 21: Ring mold
- 25: Conveyor
- 27: Second lifting mechanism
- 29: Slide mechanism
- 30: Upper mold
- 37: First lifting mechanism
- 40: Lower mold

## Claims

1. A bending device (1), comprising:
a gravity bending furnace (10) configured to define a pressing zone (Z2) and a retracting zone (Z3) therein;
a plurality of carriers (20) arranged at intervals inside the gravity bending furnace (10), each carrier (20) including a ring mold (21) supporting a peripheral edge of a glass plate (2) from below;
a conveyor (25) configured to collectively move the plurality of carriers (20);
an upper mold (30) configured to press the glass plate (2) from above in the pressing zone (Z2);
a first lifting mechanism (37) configured to lift and lower the upper mold (30) in the pressing zone (Z2);
a lower mold (40) configured to support the glass plate (2) from below in the pressing zone (Z2);
a second lifting mechanism (27) configured to attach and detach the carrier (20) to and from the conveyor (25) in the retracting zone (Z3) and to lift and lower the carrier (20) detached from the conveyor (25) in the retracting zone (Z3); and
a slide mechanism (29) configured to attach and detach the carrier (20) to and from the conveyor (25) in the pressing zone (Z2) and slide the carrier (20) detached from the conveyor (25) between the pressing zone (Z2) and the retracting zone (Z3),
wherein an upper surface (41) of the lower mold (40) supports an entire lower surface of the glass plate (2) when the upper mold (30) presses the glass plate (2) from above.

2. The bending device according to claim 1, wherein the upper surface (41) of the lower mold (40) includes no gas suction hole.

3. The bending device according to claim 1 or 2, wherein a lower surface (31) of the upper mold (30) presses an entire upper surface of the glass plate (2).

4. The bending device according to any one of claims 1 to 3, wherein a lower surface (31) of the upper mold (30) includes a gas blow hole.

5. The bending device according to any one of claims 1 to 4, further including
a suction device (32) configured to attract the glass plate (2) to the upper mold (30),
wherein the suction device (32) includes a suction cover (34) that forms an annular slit (33) for sucking gas around a lower surface (31) of the upper mold (30).

6. The bending device according to claim 5, wherein the lower surface (31) of the upper mold (30) includes no gas suction hole.

7. A bending method comprising bending the glass plate (2) by using the bending device (1) of any one of claims 1 to 6.

## Patentansprüche

1. Eine Biegevorrichtung (1), die Folgendes umfasst:
einen Schwerkraft-Biegeofen (10), der konfiguriert ist, um darin eine Presszone (Z2) und eine Rückzugs-Zone (Z3) zu definieren;
eine Vielzahl von Trägern (20), die in Abständen innerhalb des Schwerkraft-Biegeofens (10) angeordnet sind, wobei jeder Träger (20) eine Ringform (21) beinhaltet, die einen peripheren Rand einer Glasplatte (2) von unten stützt;
einen Förderer (25), der konfiguriert ist, um die Vielzahl von Trägern (20) gemeinsam zu bewegen;
ein oberes Formgebungswerkzeug (30), das konfiguriert ist, um die Glasplatte (2) in der Presszone (Z2) von oben zu pressen;
einen ersten Hebemechanismus (37), der konfiguriert ist, um das obere Formgebungswerkzeug (30) in der Presszone (22) anzuheben und abzusenken;
ein unteres Formgebungswerkzeug (40), das konfiguriert ist, um die Glasplatte (2) in der Presszone (22) von unten zu stützen;
einen zweiten Hebemechanismus (27), der konfiguriert ist, um den Träger (20) in der Rückzugs-Zone (Z3) an den Förderer (25) anzukoppeln und von diesem abzukoppeln, sowie den vom Förderer (25) abgekoppelten Träger (20) in der Rückzugs-Zone (Z3) anzuheben und abzusenken; und
einen Schiebemechanismus (29), der dazu konfiguriert ist, den Träger (20) in der Presszone (Z2) an den Förderer (25) anzukoppeln und von diesem abzukoppeln, und den vom Förderer (25) abgekoppelten Träger (20) zwischen der Presszone (Z2) und der Rückzugs-Zone (Z3) zu verschieben,
wobei eine Oberseite (41) des unteren Formgebungswerkzeugs (40) eine gesamte Unterseite der Glasplatte (2) stützt, wenn das obere Formgebungswerkzeug (30) die Glasplatte (2) von oben presst.

2. Die Biegevorrichtung nach Anspruch 1, wobei die Oberseite (41) des unteren Formgebungswerkzeugs (40) kein Gasansaugloch beinhaltet.

3. Die Biegevorrichtung nach Anspruch 1 oder 2, wobei eine Unterseite (31) des oberen Formgebungswerkzeugs (30) eine gesamte Oberseite der Glasplatte (2) presst.

4. Die Biegevorrichtung nach irgendeinem der Ansprüche von 1 bis 3, wobei eine Unterseite (31) des oberen Formgebungswerkzeugs (30) ein Gasblasloch beinhaltet.

5. Die Biegevorrichtung nach irgendeinem der Ansprüche von 1 bis 4, ferner beinhaltend:
eine Saugeinrichtung (32), die konfiguriert ist, um die Glasplatte (2) an das obere Formgebungswerkzeug (30) anzusaugen,
wobei die Saugeinrichtung (32) eine Saugabdeckung (34) beinhaltet, die einen ringförmigen Schlitz (33) zum Ansaugen von Gas um eine Unterseite (31) des oberen Formgebungswerkzeugs (30) bildet.

6. Die Biegevorrichtung nach Anspruch 5, wobei die Unterseite (31) des oberen Formgebungswerkzeugs (30) kein Gasansaugloch beinhaltet.

7. Ein Biegeverfahren, umfassend das Biegen der Glasplatte (2) unter Verwendung der Biegevorrichtung (1) nach irgendeinem der Ansprüche von 1 bis 6.

## Revendications

1. Un dispositif de cintrage (1), comprenant :
un four de cintrage par gravité (10) configuré pour définir à l'intérieur une zone de pressage (Z2) et une zone de retrait (Z3) ;
une pluralité de supports (20) disposés à intervalles à l'intérieur du four de cintrage par gravité (10), chaque support (20) incluant un moule annulaire (21) soutenant par le dessous un bord périphérique d'une plaque de verre (2) ;
un convoyeur (25) configuré pour déplacer collectivement la pluralité de supports (20) ;
un moule supérieur (30) configuré pour presser la plaque de verre (2) par le dessus dans la zone de pressage (Z2) ;
un premier mécanisme de levage (37) configuré pour lever et abaisser le moule supérieur (30) dans la zone de pressage (22) ;
un moule inférieur (40) configuré pour supporter la plaque de verre (2) par le dessous dans la zone de pressage (22) ;
un deuxième mécanisme de levage (27) configuré pour accoupler et découpler le support (20) au et du convoyeur (25) dans la zone de retrait (Z3), et pour lever et abaisser le support (20) découplé du convoyeur (25) dans la zone de retrait (Z3) ; et
un mécanisme de glissement (29) configuré pour accoupler et découpler le support (20) au et du convoyeur (25) dans la zone de pressage (Z2), et pour faire glisser le support (20) découplé du convoyeur (25) entre la zone de pressage (Z2) et la zone de retrait (Z3),
sachant qu'une surface supérieure (41) du moule inférieur (40) supporte toute la surface inférieure de la plaque de verre (2) lorsque le moule supérieur (30) presse la plaque de verre (2) par le dessus.

2. Le dispositif de cintrage d'après la revendication 1, sachant que la surface supérieure (41) du moule inférieur (40) n'inclut pas de trou d'aspiration de gaz.

3. Le dispositif de cintrage d'après la revendication 1 ou 2, sachant que la surface inférieure (31) du moule supérieur (30) presse l'intégralité d'une surface supérieure de la plaque de verre (2).

4. Le dispositif de cintrage d'après l'une quelconque des revendications de 1 à 3, sachant que la surface inférieure (31) du moule supérieur (30) inclut un trou de soufflage de gaz.

5. Le dispositif de cintrage d'après l'une quelconque des revendications de 1 à 4, incluant en outre
un dispositif d'aspiration (32) configuré pour attirer la plaque de verre (2) vers le moule supérieur (30),
sachant que le dispositif d'aspiration (32) inclut un capot d'aspiration (34) qui forme une fente annulaire (33) pour aspirer le gaz autour d'une surface inférieure (31) du moule supérieur (30).

6. Le dispositif de cintrage d'après la revendication 5, sachant que la surface inférieure (31) du moule supérieur (30) ne comprend pas de trou d'aspiration de gaz.

7. Un procédé de cintrage comprenant le cintrage de la plaque de verre (2) à l'aide du dispositif de cintrage (1) d'après l'une quelconque des revendications de 1 à 6.
